# EUROPEAN PATENT APPLICATION

(11) **EP 3 629 159 A1**
(43) Date of publication of application: **01.04.2020**
(21) Application number: 18382692.4
(22) Date of filing: 28.09.2018
(51) Int. Cl.: G06F 9/445, G06F 21/50, G06F 21/51, G06F 21/56

(54) **RISK COMPUTATION FOR SOFTWARE EXTENSIONS**

(71) Applicant: Telefonica Digital España, S.L.U., 28013 Madrid (ES)
(72) Inventor: BREZO FERNÁNDEZ, Félix, 28013 MADRID (ES); BIANZINO, Aruna, Prem, 28013 MADRID (ES); DE LOS SANTOS VÍLCHEZ, Sergio, 28013 MADRID (ES)
(74) Representative: Herrero & Asociados, S.L.

(57) **Abstract**

It is provided computer implemented method for analysis of a software extension for installation and execution in a computing system, the method comprising obtaining a software extension from a marketplace, analyzing contents of the obtained software extension and computing a risk index based on the analyzed software extension and on information related to previously-downloaded software extensions stored in a local database, as well as related to previously detected malware. The risk index is computed before installing and executing the software extension in the computing system and wherein a high value of the risk index persuades a user to install and execute the software extension in the computing system.

## Description

### TECHNICAL FIELD OF THE INVENTION

Present invention generally relates to methods and systems for security analysis and risk estimation of application extensions.

### BACKGROUND OF THE INVENTION

The functionalities of software applications are extended by application extensions. An application extension is a plug-in for the application extending its functionalities. It may be coded using different technologies, e.g., JavaScript, HTML, CSS or specific machine coding, using APIs provided by the software developer. For example, browser extensions can be used for improving a browser's user interface, security or accessibility, blocking advertisements, and various other features to make browsing the internet easier and more pleasant.

Extensions may result in interface alteration, inter-platform connection, new functionalities, etc. For example, browser extensions extend the functionalities of said web browsers in order to ease the user experience and come closer to their custom needs. Similar extensions exist for other kind of software, including text editors or messaging system.

In web browsers, in order for the extensions to be able to provide the intended extra functionalities, they may access to specific resources of the hosting system and/or the web, performing eventual operation on the resources and content. These resources may include, but are not limited to, the user browsing history, downloads, cookies, physical location, browser notification settings, local storage, remote resources accessible by the network, etc.

The custom nature of the extensions and the open possibility to develop them, and the wide range and key nature of the resources that extensions may access and manipulate raise security concerns. For instance, a browser extension could alter the content of a visualized webpage misleading the user or collect sensitive information the user is entering in a webpage to send them to a remote system controlled by a malicious third party.

Even if the extensions are subject to automatic and manual analysis before being published on the corresponding open market, various cases show up of extensions including malicious code, e.g., mining code for cryptocurrency. This shows that current solutions that guarantee customer security through a proper check before distributing applications through the corresponding marketplaces are not enough.

Hence, there is a need for a technical solution that would solve at least the aforementioned drawbacks involved with the current software security analysis procedures with regard to software extensions.

### SUMMARY

It is proposed a solution to assign a security ranking to software extensions, on the basis of an analysis of its components, permissions and manifests. The proposed analysis can detect eventual security risks for the user and make the user aware of them before installing and using the software extension. To achieve this, the proposed solution solves at least the aforementioned problems by providing a method for analyzing a software extension in order to compute a risk index that reflects the security risk of the software extension prior to the installation and execution of said software extension on any computing device.

The proposed risk index can increase the security awareness of the final user, e.g. a high value of the risk index can persuade a user to install and execute the software extension in the computing system. The risk index is able to inform a user about eventual security risks within the software extension as e.g. malicious code and make the user aware of the risk before installing and using the software extension. Therefore, the security risks can be minimized. In some examples, the risk index can be e.g. a user warning to be displayed in a user's interface or any other type of graphic indicator that could comprise text, numbers and/or multimedia content.

Software extensions as e.g. web browser, text editors or messaging systems can apply to the proposed solution. As such, all considerations expressed hereafter are valid for any kind of such extensions, presenting all of them common characteristics and structure.

Hence, in a first aspect according to the present disclosure, it is proposed a computer implemented method for evaluating a software extension for execution in a computing system.

A first step comprises obtaining of a software extension from a marketplace for analysis. In some examples, an internet bot as e.g. a crawler can automatically check if new extensions or versions of known extensions are available, and wherein the crawler can account for a given list of known marketplaces. Hence, it may be possible that the crawler obtains a plurality of software extensions by accessing known marketplaces given from a list of known marketplaces. This first step may include the downloading of the software extension, the computation of a hash function for indexing the downloaded software extension and a decompression of the downloaded software extension for analysis of contents of the software extension.

In a second step, the method comprises analyzing contents of the obtained software extension. The software extension can be a new extension or a version of a previously downloaded extension stored in a local database of the computing system. In case the software extension is a version of a previously downloaded software extension, the method compares said software extension with old versions of the same software extension which were stored in the local database. In some examples, comparing said software extension with previously-stored versions can comprise identifying the changes of the software extension and eventually finding patterns or other warning signals among the changes of the obtained software extensions and previous versions stored in the local database.

Following the analysis of contents of the software extension according to the second step of the proposed method, it may be possible to obtain a size of the software extension and a size of included files within the software extension, verify formats of included files in the software extension, search for files of the software extension an extract metadata as e.g. temporal files and versioning files. The metadata can be stored and parsed to obtain information on the used development environment. The method can also identify a default language and a localization of the software extension, search for obfuscated content in the software extension and identify image files in the software extension. If image files are found, the method may search for similar images to said identified image files in the local and remote database and extract metadata from said similar images.

In some examples, this step also includes analyzing code files of the software extension in order to detect regular expressions, select specific commands, find requests to remote domains, load remote code if a remote URL is analyzed and verify languages of code files and patterns in the code files. Comments in the code can be also analyzed.

Software extensions require the presence of a manifest file which comprises information about the extensions themselves, in order to be published in the software open market. Similar specific files, or functionally equivalent ones, are required by the marketplace of other kind of software. This file manifest file can include information about the extension as e.g. software extension name, version, default language and permissions to access local and remote resources required by the extension to perform and being executed, e.g. browsing history, specific remote URL, local storage, tabs, location of other files, scripts used by the extension to work, etc. In some examples, this step includes identifying author of the software extension, extension version, web pages on which the extension acts if said extension relates to web browsers and extension permissions.

Moreover, analyzing contents of the obtained software extension can also comprise establishing a connection to known public databases of malware to parse the content of the software extension against known malware.

In a third step, the method comprises computing a risk index based on the analyzed content of the obtained software extension, on information related to previously-downloaded software extensions stored in a local database and known malware store in a remote database. In this regard, the local database dynamically stores correlations between the analyzed contents and information related to previously-stored software extension in the local database to compute the risk index.

Hence, the proposed method can also analyze the information of the manifest file, code files and data and metadata related to contents included in the software extension and the data and metadata stored in the local database from previously downloaded software in order to compute the risk index and obtain a risk level of the software extension before installing and executing said software extension in a computing system. It should be pointed out that any combination of analyzed content of the software extension and obtained data and metadata from one or more local and or remote databases is possible in order to compute the risk index.

In a second aspect, it is provided a system for analysis of a software extension for execution in a computing system. The system comprises an internet bot module configured to download a software extension from a marketplace. In some examples the internet bot module is a web crawler. The systems also comprises a local database storing previously-downloaded software extensions. The local database dynamically stores correlations between analyzed contents of software extension and information related to previously-stored extensions in the local database to compute the risk index.

The systems also comprises a hashing and decompression module configured to perform a hash function of the downloaded software extension for indexing purposes and decompressing the downloaded software extension.

The system also determines if the decompressed software extension is a new extension or a new version of a previously-stored extension in a local database. If the software extension is a new version of a previously-stored extension, a comparison module can perform a comparison of the obtained software extension and previously-stored software extensions in a local database. The comparison can be performed by identifying the changes between software versions and eventually finding patterns or other warning signals among the changes.

The system also comprises a package analyzer module configured to analyze contents of the obtained software extension. The local database can be accessed by a package analyzer module to obtain data related to previously-stored extensions. The package analyzer module is configured to obtain a size of the software extension and a size of included files within the software extension, verify formats of the included files in the software extension, search for metadata in all the included files, as e.g. in temporal files and versioning files , identify a default language and a localization of the software extension, search for obfuscated content in the software extension, and identify image files and search for images similar to the identified image files and extract metadata from said similar images. Furthermore, patterns in the code of the software extension and code comments are also searched in order to find similarities with other previously-stored extensions and/or previously known malicious extensions or malicious software.

Furthermore, in some examples, the package analyzer module is configured to analyze code files of the software extension to detect regular expressions, select specific commands, find requests to remote domains, load of remote code if a remote URL is analyzed and verify languages of code files and patterns in the code files and its comments.

In some examples, the package analyzer module is configured to analyze a manifest of the software extension to identify author, verify version, check pages on which the extension acts and review permissions. Furthermore, the package analyzer module is configured to parse the content of the software extension against known malware located in external database. The parsing of content of the software extension against known malware may comprise looking for similarities in the code and comments, as well as common strings of code with the known malware.

The system also comprises a risk computation module configured to compute a risk index based on the analyzed content of the obtained software extension and on information related to previously-downloaded software extensions in the local database, as well as to known malicious extensions and software in remote databases. The risk index is computed before installing and executing the software extension in the computing system. A high value of the risk index persuades a user to install and execute the software extension in the computing system.

In a third aspect, it is provided a computer program encoded on a non-transitory digital data storage medium comprising non-transitory computer readable instructions for causing one or more processors to perform the proposed method.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

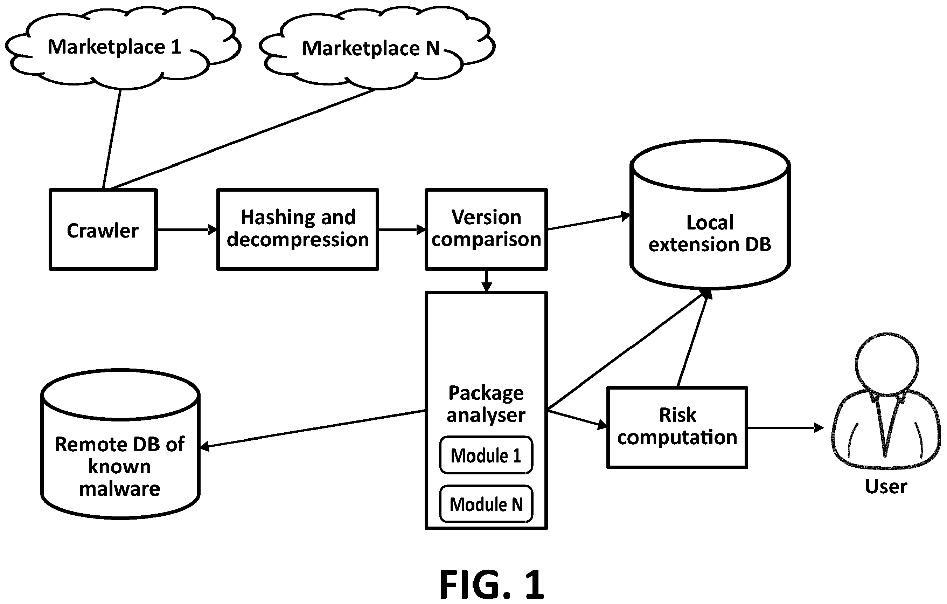

Figure 1 shows a diagram of an architecture showing modules used to perform a method for obtaining a risk index of a software extension according to the present disclosure.

### DETAILED DESCRIPTION

Figure 1 shows a diagram of an example of an architecture of the resulting system. The crawler module, checks if new extensions, or new versions of known extensions are available, accounting for a given list of known marketplaces, in particular from marketplace 1 to marketplace N. Software extensions as e.g. web browser, text editors or messaging systems can apply to the proposed solution.

In the hashing and decompression module the found software extensions are automatically downloaded, a hash is computed for each of the found extensions. Furthermore each of the found extensions are decompressed.

The comparison module or version comparison module as shown in figure 1 receives the decompressed software extension from the hashing and decompression module and interfaces with the local database to access previous stored software extensions. In case the downloaded extension is a new version of a known extension, a comparison against previous versions is performed for comparing the downloaded version with respect to old versions stored in the local database.

Figure 1 also shows the package analyzer module receiving the software extension from the version comparison module after using the hash functions. The package analyzer module can perform the previously mentioned steps of searching code files of the software extension in order to be analyzed, detecting regular expressions, selecting commands, finding requests to remote domains, loading of remote code if a remote URL is analyzed and verifying languages of code files and patterns in the code files and in its comments. The package analyzer can analyze an extension manifest in the browser extension to identify author, version, pages on which the extension acts and review permissions. Furthermore, the package analyzer is also interfacing with a remote database of known malware. The package analyzer can access the remote database to parse the downloaded software extension against known malware stored in said database.

Finally, the risk computation module provides a risk index to a user as shown in figure 1. The risk computation module interfaces with the package analyzer and the local database module to compute the risk index based on the collected information in the package analyzer module, supplemented with correlation information and data from the local database related to previously-stored extensions packages. Hence, the risk index is able to inform about eventual security risks within the software extension as e.g. malicious code to inform a user and make the user aware of them before installing and using the software extension and therefore, minimizing the security risks in a computing system.

The term "comprises" and the derivations thereof (such as "comprising", etc.) must not be understood in an exclusive sense, i.e., these terms must not be interpreted as excluding the possibility that what is described and defined may include additional elements, steps, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A computer implemented method for analysis of a software extension for installation and execution in a computing system, the method comprising:
obtaining a software extension from a marketplace,
analyzing contents of the obtained software extension; and
computing a risk index based on the analyzed software extension and on information related to previously-downloaded software extensions stored in a local database,
wherein the risk index is computed before installing and executing the software extension in the computing system, and
wherein a high value of the risk index persuades a user to install and execute the software extension in the computing system.

2. The computer implemented method of claim 1, wherein obtaining a software extension from a marketplace comprises:
downloading the software extension from the marketplace with a web crawler;
performing a hash function of the downloaded software extension for indexing the downloaded software extension; and
decompressing the downloaded software extension.

3. The computer implemented method of claim 2, wherein analyzing contents of the obtained software extension comprises:
determining if the decompressed software extension is a new extension or a new version of a previously-stored extension in the local database; and
if the decompressed software extension is a new version of a previously-stored extension:
performing a comparison of files in the software extension after decompression against previous versions of the same extension, stored in the local database.

4. The computer implemented method according to claim 3, wherein analyzing contents of the obtained software extension comprises:
obtaining a size of the software extension and a size of included files within the software extension;
verifying formats of the included files in the software extension;
extracting metadata for analysis from all the files of the software extension;
identifying a default language and a localization of the software extension;
searching for obfuscated content in the software extension; and
identifying image files and search for similar images to said identified image files in the local database and extract metadata from said similar images.

5. The computer implemented method according to claims 3 to 4, wherein analyzing contents of the obtained software extension comprises analyzing code files of the software extension by:
detecting regular expressions;
selecting specific commands;
finding requests to remote domains;
loading of remote code if a remote URL is analyzed; and
verifying languages of code files and patterns in the code files and in its comments.

6. The computer implemented method according to claims 3 to 5, wherein analyzing contents of the obtained software extension comprises analyzing a manifest of the software extension by:
identifying author of the software extension;
verifying version of the software extension;
checking web pages on which the extension acts if the extension relates to a web browser; and
reviewing permissions of the software extension.

7. The computer implemented method according to claim 3 to 6, wherein analyzing contents of the obtained software extension comprises parsing the content of the software extension against known malware located in an external database.

8. The computer implemented method according to any of the preceding claims, further comprising obtaining a plurality of software extensions by accessing known marketplaces given from a list of known marketplaces.

9. The computer implemented method according to any of the preceding claims, further comprising providing the risk index to a user of the computing system.

10. A system for analysis of a software extension for execution in a computing system, the system comprising:
an internet bot module configured to download a software extension from a marketplace;
a package analyzer module configured to analyze contents of the obtained software extension;
a local database storing previously-downloaded software extensions; and
a risk computation module configured to compute a risk index based on the analyzed content of the obtained software extension and on information related to previously-downloaded software extensions in the local database,
wherein the risk index is computed before installing and executing the software extension in the computing system,
and
wherein a high value of the risk index persuades a user to install and execute the software extension in the computing system.

11. The system for analysis of a software extension of claim 10, further comprising a hashing and decompression module configured to:
performing a hash function of the downloaded software extension for indexing the downloaded software extension; and
decompressing the downloaded software extension.

12. The system for analysis of a software extension of claim 11, further comprising:
a comparison module to determining if the decompressed software extension is a new extension or a new version of a previously-stored extension in a local database; and
if the software extension is a new version of a previously-stored extension:
performing a comparison of the files of the obtained software extension and files of previously-downloaded extensions stored in the local database.

13. The system for analysis of a software extension of claim 10,
wherein the package analyzer module is configured to:
obtain a size of the software extension and a size of included files within the software extension;
verify formats of the included files in the software extension;
extract metadata for analysis from all the files of the software extension ;
identify a default language and a localization of the software extension; search for obfuscated content in the software extension;
identify image files and search for similar images to said identified image files in the local database and extract metadata from said similar images.
wherein the package analyzer module is configured to analyze code files of the software extension to:
detect regular expressions;
select specific commands;
find requests to remote domains;
load of remote code if a remote URL is analyzed; and
verify languages of code files and patterns in the code files and
in its comments.
wherein the package analyzer module is configured to analyze a manifest of the software extension to:
identify author of the software extension;
verify version of the software extension;
check web pages on which the extension acts if the extension relates to a web browser; and
review permissions of the software extension,
wherein the package analyzer module is configured to parse the content of the software extension against known malware located in an external database.

14. The system for analysis of a software extension of claim 10, wherein the internet bot module is a web crawler.

15. A computer program encoded on a non-transitory digital data storage medium, the program comprising non-transitory computer readable instructions for causing one or more processors to perform operations to computer implemented method of claims 1 to 9.
